# EUROPEAN PATENT APPLICATION

(11) **EP 2 799 288 A2**
(43) Date of publication of application: **05.11.2014**
(21) Application number: 14166864.0
(22) Date of filing: 02.05.2014
(51) Int. Cl.: B60R 13/02, B29C 65/14

(54) **Infrared welding process for bonding portions of a vehicle interior assembly**

(30) Priority: 02.05.2013 US 201361818476 P
(71) Applicant: Johnson Controls Technology Company, Holland, MI 49423 (US)
(72) Inventor: Sterne Stroebe Jennifer Anne, Holland, MI 49424 (US); Waldron Christopher Robert, Byron Center , MI 49315 (US); Potjer Jeffrey Carl, Jenison , MI 49428 (US)
(74) Representative: Finger, Catrin

(57) **Abstract**

A method of manufacturing a vehicle interior assembly (16). The method includes attaching a scrim (28) to a polyurethane substrate (26). The method also includes disposing a polypropylene material (24) directly on the scrim (28). The method includes applying infrared energy (30) to the polypropylene material (24) to bond the polypropylene material (24) to the scrim (28).

## Description

### CROSS REFERENCE TO RELATED APPLICATION

This application claims priority from and the benefit of U.S. Provisional Patent Application Serial No. 61/818,476, entitled "INFRARED WELDING PROCESS FOR BONDING PORTIONS OF A VEHICLE INTERIOR ASSEMBLY", filed May 2, 2013, which is hereby incorporated by reference in its entirety.

### BACKGROUND

The invention relates generally to motor vehicles, and more particularly, to an infrared welding process for bonding portions of a vehicle interior assembly.

A vehicle generally includes a headliner that is attached to its inside roof. During assembly of the headliner, various parts may be attached to the headliner using an adhesive, such as hot glue. For example, a polypropylene (PP) safety plastic may be attached to a PP headliner substrate using hot glue. Unfortunately, using hot glue adds unnecessary weight to the headliner. Furthermore, the hot glue may increase manufacturing waste, time, and cost. To replace the use of hot glue for attaching a PP safety plastic to a PP headliner, infrared welding may be used. Infrared welding uses infrared radiation to direct the PP safety plastic to chemically bond with the PP headliner. Unfortunately, a PP safety plastic does not chemically bond with a polyurethane (PU) headliner substrate. Accordingly, hot glue is often used to attach a PP safety plastic to a PU headliner substrate. Thus, because of the hot glue, such a headliner may have an undesirable weight, may be expensive to manufacture, and/or may be time consuming to manufacture.

### BRIEF DESCRIPTION OF THE INVENTION

The present invention relates to a method of manufacturing a vehicle interior assembly. The method includes attaching a scrim to a polyurethane substrate. The method also includes disposing a polypropylene material directly on the scrim. The method includes applying infrared energy to the polypropylene material to bond the polypropylene material to the scrim.

The present invention also relates to a vehicle interior assembly having a polyurethane substrate and a scrim attached to the polyurethane substrate. The vehicle interior assembly also includes a polypropylene material bonded to the scrim by an infrared welding process and without an adhesive.

The present invention further relates to a method of manufacturing a vehicle interior assembly. The method includes disposing a polypropylene material directly on a scrim. Moreover, the scrim is attached to a polyurethane substrate. The method also includes melting a portion of the polypropylene material into the scrim using infrared energy to mechanically bond the polypropylene material to the scrim.

### DRAWINGS

FIG. 1 is a perspective view of an exemplary vehicle that includes a headliner which may have a polypropylene (PP) safety plastic attached to a scrim of a polyurethane (PU) headliner substrate without using an adhesive.
FIG. 2 is a top view of an embodiment of a headliner that includes a PP safety plastic attached to a scrim of a PU headliner substrate without using an adhesive.
FIG. 3 is a cross-sectional view of an embodiment of a headliner that includes a PP safety plastic attached to a scrim of a PU headliner substrate without using an adhesive.
FIG. 4 is a flow chart of an embodiment of a method of manufacturing a vehicle interior assembly having a PP material attached to a scrim of a PU substrate without using an adhesive.

### DETAILED DESCRIPTION

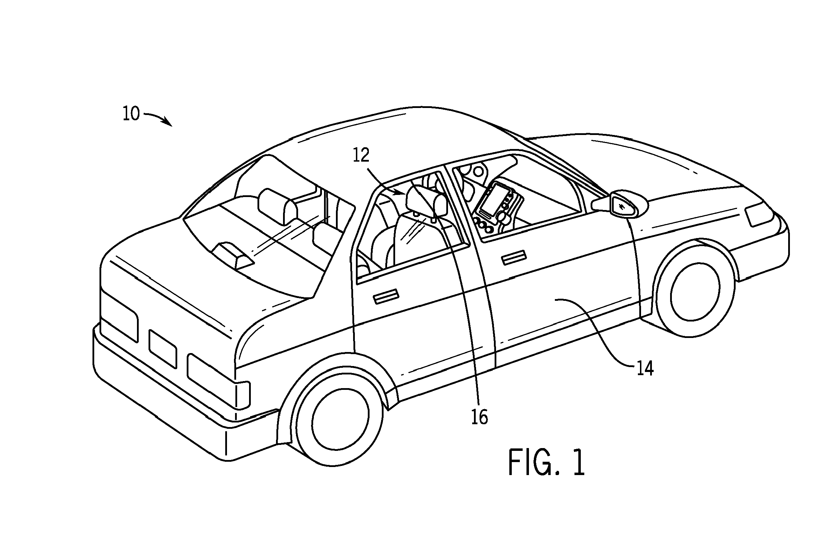

FIG. 1 is a perspective view of an exemplary vehicle 10 that includes a headliner which may have a polypropylene (PP) safety plastic attached to a scrim of a polyurethane (PU) headliner substrate without using an adhesive. The vehicle 10, in this case a car, includes an interior 12 and an exterior 14. A headliner 16 is attached to a roof of the interior 12. The headliner 16 may be formed using a PU headliner substrate (e.g., foam). Furthermore, the headliner 16 may include a PP safety plastic attached to a scrim of the PU headliner substrate without using an adhesive. For example, the PP safety plastic may be attached to the scrim using infrared welding. Specifically, an infrared absorbing (e.g., dark colored such as black) polyethylene terephthalate (PET) scrim (e.g., woven fabric) may be attached to the PU headliner substrate. Thereafter, the PP safety plastic may be bonded to the infrared absorbing PET scrim using infrared welding. By using infrared welding, a portion of the PP safety plastic melts into the fabric of the PET scrim and mechanically bonds the PP safety plastic to the PET scrim. Thus, the PET scrim facilitates bonding of the PP safety plastic to the PU headliner substrate.

It should be noted that a dark color of the PET scrim increases the infrared absorption and emissivity of the PET scrim as compared to a light colored PET scrim. Furthermore, it should be noted that properties other than color may increase the infrared absorption and emissivity of the PET scrim. Accordingly, the PET scrim absorbs infrared energy directed toward it during infrared welding. Thus, with an infrared absorbing PET scrim infrared welding may be performed quickly. Furthermore, infrared welding may be performed to strongly bond the PP safety plastic to an infrared absorbing PET scrim without melting the PU headliner substrate. Moreover, by eliminating the use of an adhesive to bond the PP safety plastic to the scrim of the PU headliner substrate, the weight of the headliner 16 may be reduced, the cost of manufacturing the headliner 16 may be reduced (e.g., because there is no expense for the hot glue), and the headliner 16 may be manufactured more quickly. For example, the time to attach the PP safety plastic to the PET scrim using infrared welding may be up to approximately 5 seconds faster than using hot glue to attach the PP safety plastic to the PU headliner substrate.

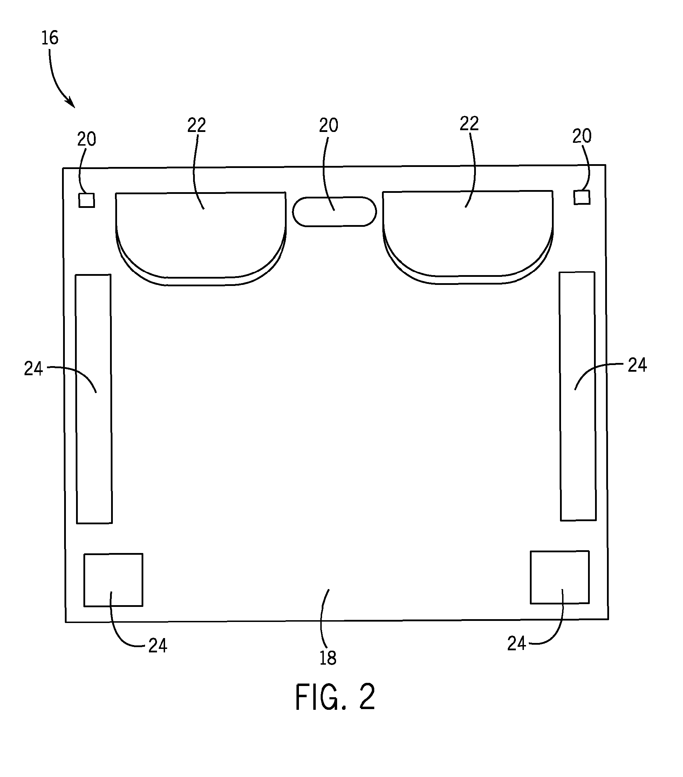

FIG. 2 is a top view of an embodiment of the headliner 16 that includes a PP safety plastic attached to a scrim of a PU headliner substrate without using an adhesive. The headliner 16 includes an assembly 18 having an infrared absorbing PET scrim attached to a PU headliner substrate. Moreover, the headliner 16 includes various openings 20 for coupling the headliner 16 to the interior 12 of the vehicle 10, for installing devices (e.g., rear view mirror, etc.), and/or to enable access to devices (e.g., sunroof, etc.). Furthermore, the headliner 16 includes various contours 22 to conform to a specific design. The headliner 16 also includes PP safety plastic 24 attached to the assembly 18 at various locations. As may be appreciated, the positions, the sizes, the shapes, and/or the number of openings 20, contours 22, and PP safety plastics 24 may vary based on a particular design of the headliner 16.

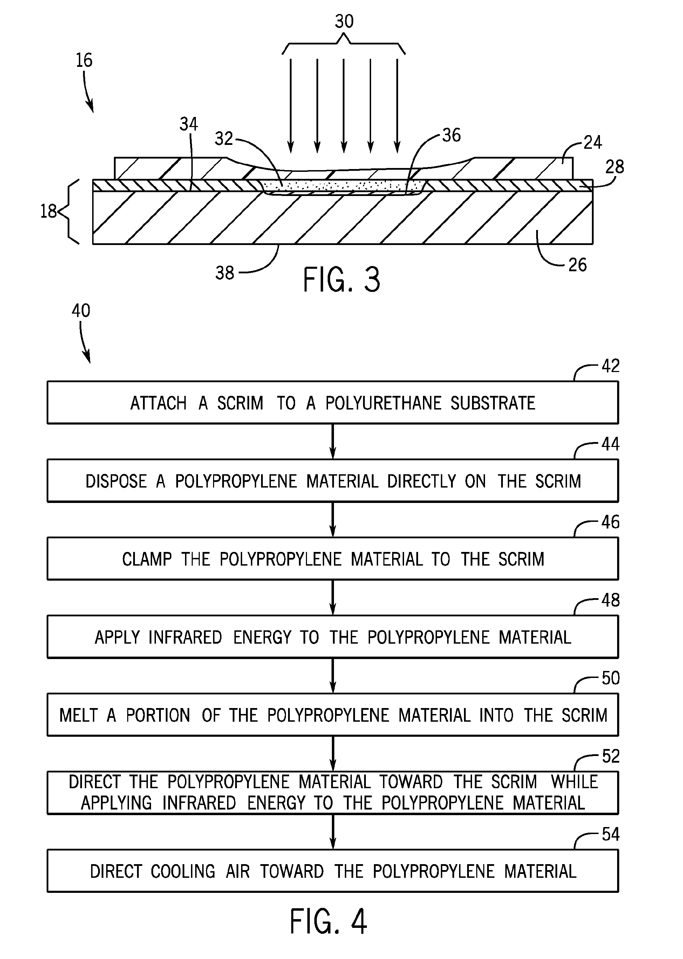

FIG. 3 is a cross-sectional view of an embodiment of the headliner 16 that includes the PP safety plastic 24 attached to a scrim of a PU headliner substrate without using an adhesive. Specifically, the assembly 18 includes a PU headliner substrate 26 and an infrared absorbing PET scrim 28. The PP safety plastic 24 is attached to the PET scrim 28 by applying infrared energy 30 (e.g., using an infrared welding process) to the PP safety plastic 24. The infrared energy 30 causes the PP safety plastic 24 to melt into the PET scrim 28, as illustrated by portion 32. Within the portion 32, the PP melts into the weave of the PET scrim 28 forming a mechanical bond between the PP safety plastic 24 and the PET scrim 28 (e.g., interweaving portions of the PP safety plastic 24 with portions of the PET scrim 28). As may be appreciated, the infrared energy 30 may penetrate the PU headliner substrate 26 on a rear surface 34 over a portion 36 of the PU headliner substrate 26. However, such penetration may be insufficient to melt a significant portion of the PU headliner substrate 26. Furthermore, there is no evidence of such penetration on a show surface 38 of the PU headliner substrate 26. Thus, the PP safety plastic 24 may be attached to the PET scrim 28 of the PU headliner substrate 26 without using an adhesive. Accordingly, the weight of the headliner 16 may be reduced, the cost of manufacturing the headliner 16 may be reduced, and the headliner may be manufactured more quickly.

FIG. 4 is a flow chart of an embodiment of a method 40 of manufacturing a vehicle interior assembly having a PP material attached to a scrim of a PU substrate without using an adhesive. A scrim (e.g., the PET scrim 28) is attached to a PU substrate (e.g., the PU headliner substrate 26, or another PU substrate such as for a door assembly, etc.) using any suitable method (block 42). For example, the scrim may be bonded, glued, sewn, and/or secured to the PU substrate. In certain embodiments, the scrim may be chemically bonded to the PU substrate while the PU substrate is formed. The scrim may be formed from an infrared absorbing PET material (e.g., black PET material). A PP material (e.g., the PP safety plastic 24) is disposed directly on the scrim (block 44). With the PP material disposed directly on the scrim, an infrared welding process may be used to bond the PP material to the scrim.

The infrared welding process may include clamping the PP material to the scrim (block 46). Such clamping may occur by applying pressure to the surface of the PP material to direct the PP material toward the scrim at a desired bonding location. The infrared welding process also includes applying infrared energy to the PP material and toward the scrim to bond the PP material to the scrim without an adhesive (block 48). For example, a light source may emit both visible light and invisible (e.g., infrared) light. The infrared light may be focused toward the desired bond location, such as by using a concentrator and/or a reflector. This results in a desired portion of the PP material being melted into the scrim (block 50). Furthermore, the infrared welding process may include directing the PP material toward the scrim while applying the infrared energy to the PP material (block 52). For example, pressurized air may be used to direct the PP material toward the scrim. As may be appreciated, the length of time that the infrared energy is applied to bond the PP material to the scrim may be less than approximately 50% of the time used to bond two PP materials together. After infrared energy is applied to the PP material, cooling air may be directed toward the PP material to cool any melted material (block 54). Thus, the infrared welding process results in a connection between the PP material and the PU substrate.

Using the methods described herein, a PP material may be bonded to a scrim of a PU substrate without an adhesive. For example, any PP material may be bonded to a scrim of a PU substrate, such as in a headliner, a door assembly, or any other vehicle assembly. By eliminating the use of an adhesive to bond the PP material to the scrim of the PU substrate, the weight of an assembly may be reduced, the cost of manufacturing the assembly may be reduced, and the assembly may be manufactured more quickly. For example, the time to attach the PP material to the scrim using infrared welding may be at least approximately 5 seconds faster than using hot glue to attach the PP material to the scrim.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. It is, therefore, to be understood that the appended claims are intended to cover all such modifications and changes as fall within the true spirit of the invention. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. A method of manufacturing a vehicle interior assembly, comprising:
attaching a scrim to a polyurethane substrate;
disposing a polypropylene material directly on the scrim; and
applying infrared energy to the polypropylene material to bond the polypropylene material to the scrim.

2. The method of claim 1, wherein the scrim comprises polyethylene terephthalate.

3. The method of claim 1, wherein the scrim comprises a material configured to absorb infrared energy.

4. The method of claim 1, wherein the scrim comprises a black material.

5. The method of claim 1, wherein the polyurethane substrate comprises a headliner substrate.

6. The method of claim 1, wherein the polypropylene material comprises a safety plastic.

7. The method of claim 1, wherein the bond is a mechanical bond.

8. The method of claim 1, comprising clamping the polypropylene material to the scrim.

9. The method of claim 1, wherein applying infrared energy to the polypropylene material comprising melting a portion of the polypropylene material into the scrim.

10. The method of claim 1, wherein applying infrared energy to the polypropylene material comprises emitting light from a light source.

11. The method of claim 10, wherein emitting light from the light source comprises emitting visible light and infrared light.

12. The method of claim 1, comprising directing the polypropylene material toward the scrim while applying infrared energy to the polypropylene material.

13. The method of claim 12, wherein directing the polypropylene material toward the scrim comprises directing pressurized air toward the polypropylene material.

14. The method of claim 1, comprising directing cooling air toward the polypropylene material after applying infrared energy to the polypropylene material.

15. A vehicle interior assembly comprising:
a polyurethane substrate;
a scrim attached to the polyurethane substrate; and
a polypropylene material bonded to the scrim by an infrared welding process and without an adhesive.

16. The vehicle interior assembly of claim 15, wherein at least a portion of the polypropylene material is melted into the scrim by the infrared welding process.

17. The vehicle interior assembly of claim 15, wherein the scrim comprises a infrared absorbing polyethylene terephthalate material.

18. A method of manufacturing a vehicle interior assembly, comprising:
disposing a polypropylene material directly on a scrim, wherein the scrim is attached to a polyurethane substrate; and
melting a portion of the polypropylene material into the scrim using infrared energy to mechanically bond the polypropylene material to the scrim.

19. The method of claim 18, wherein the portion of the polypropylene material is melted into the scrim via a light source emitting infrared energy.

20. The method of claim 18, wherein disposing the polypropylene material directly on the scrim comprises disposing the polypropylene material directly on an infrared absorbing scrim.
